# FASCICULE DE BREVET EUROPEEN

(11) **EP 0 559 563 B1**
(45) Date de publication et mention de la délivrance du brevet: **04.12.1996**
(21) Numéro de dépôt: 93400554.7
(22) Date de dépôt: 03.03.1993
(51) Int. Cl.: F16D 66/02

(54) **Procédé pour réaliser un dispositif de détection d'usure de garnitures de friction et dispositif obtenu par mise en oeuvre de ce procédé**
Verfahren zur Herstellung einer Vorrichtung zur Verschleissanzeige von Reibbelägen und mit diesem Verfahren gefertigte Vorrichtung
Method for producing a device for detecting wear of friction lining and device obtained by using this method

(30) Priorité: 03.03.1992 FR 9202509
(43) Date de publication de la demande: 08.09.1993
(73) Titulaire: COMPAGNIE PLASTIC OMNIUM Société Anonyme dite:, 69007 Lyon (FR)
(72) Inventeur: Schosseler, René, F-95100 Argenteuil (FR); Bartocci, Marcel, F-52200 Langres (FR)
(74) Mandataire: Leszczynski, André

(56) Documents cités:
- DE-A- 2 030 966
- FR-A- 2 507 722
- GB-A- 2 149 034

## Description

La présente invention est relative à un procédé pour réaliser un dispositif de détection d'usure de garnitures de friction et à un dispositif obtenu par mise en oeuvre de ce procédé.

Dans de nombreux domaines techniques, notamment pour la réalisation de systèmes de freinage de véhicules, on utilise des garnitures de friction qui sont destinées à venir au contact de pièces en mouvement pour en réduire la vitesse par frottement.

Par exemple, pour réaliser un frein à disque sur une roue de voiture, on dispose deux plaquettes de freins de part et d'autre d'un disque solidaire de cette roue, plaquettes qui sont susceptibles, lors du freinage, d'être comprimées sur celui-ci pour diminuer sa vitesse de rotation par frottement.

Bien entendu, ce fonctionnement s'accompagne de l'usure des plaquettes et il est nécessaire de remplacer ces dernières dès que l'épaisseur de leur garniture devient trop faible.

Pour détecter l'usure des garnitures de friction, on connaît des dispositifs de détection d'usure qui, reliés à un circuit électrique, permettent de signaler le moment à partir duquel il s'avère nécessaire de procéder au remplacement des plaquettes.

Selon un procédé connu pour réaliser de tels dispositifs, par exemple celui décrit dans FR-A-2507722, on obture l'extrémité de la gaine d'un fil conducteur électrique gainé, de façon stable et électriquement isolante dans tout le domaine de températures d'utilisation de la garniture, on forme dans une paroi latérale d'une garniture de friction, un trou, d'axe sensiblement parallèle à la surface d'usure de la garniture, et l'on insère dans ce trou l'extrémité du fil conducteur électrique gainé que l'on maintient en position par collage.

De cette manière, le disque qui frotte sur la plaquette arrive nécessairement au contact de l'âme conductrice du fil au bout d'un certain temps d'utilisation. Ce contact ferme un circuit électrique, ce qui déclenche un signal indicateur de l'usure des plaquettes.

Un tel dispositif présente cependant l'inconvénient majeur qu'il est d'une fiabilité limitée dans la mesure où la gaine du fil inséré dans la plaquette est elle-même vulnérable aux intempéries, aux échauffements très importants subis par la garniture et aux déformations internes de l'âme de son fil conducteur électrique soumise à d'importantes variations de températures.

Le fil conducteur doit comporter une gaine qui soit à la fois étanche à l'eau, résistante à la traction et capable de supporter d'importantes élévations de température. La réunion de ces trois propriétés est un problème délicat, les produits étanches à l'eau qui supportent des températures élevées n'étant généralement pas résistants à la traction.

De brutales manipulations du dispositif ou des conditions d'utilisation rigoureuses peuvent cependant conduire à des tractions importantes et à la détérioration du fil.

La détérioration du fil peut avoir pour conséquence la génération de parasites électriques qui gênent en particulier le fonctionnement des autoradios.

Par ailleurs, DE-A-2039166 décrit un dispositif de détection d'usure de garnitures de friction dans lequel des fils conducteurs électriques sont noyés dans une couche de résine.

La présente invention vise à proposer un procédé pour réaliser un dispositif de détection d'usure de garnitures de friction qui résout les inconvénients mentionnés ci-dessus tout en fournissant un dispositif fiable et durable, dont la mise en oeuvre est en outre simple et économique.

La présente invention a pour objet un procédé pour réaliser un dispositif de détection d'usure de garnitures de friction, notamment de garnitures de plaquettes de freins, selon lequel sur une paroi latérale d'une garniture de friction, on réalise un trou d'axe sensiblement parallèle à la surface d'usure de la garniture et l'on insère dans ce trou l'extrémité d'un fil conducteur électrique gainé que l'on maintient en position par collage, avant d'insérer le fil conducteur électrique gainé dans ledit trou, on obture l'extrémité de sa gaine en déposant une goutte de résine durcissable, stable et isolante électriquement dans tout le domaine de température d'utilisation de la garniture.

Le dispositif de détection d'usure réalisé selon ce nouveau procédé se révèle d'une plus grande fiabilité que ceux obtenus par la mise en oeuvre des procédés connus.

En effet, selon l'invention, l'extrémité du fil conducteur se trouve parfaitement isolée, évitant tout contact électrique intempestif entre son âme conductrice et l'extérieur qui serait susceptible d'engendrer par exemple des parasites dans les autoradios.

Selon l'invention, seule l'extrémité de la gaine est obturée et c'est toute l'extrémité du fil conducteur électrique gainé qui est introduite dans le trou latéral de la garniture, et qui est maintenue par collage.

De préférence, la résine qui obture l'extrémité de la gaine du fil conducteur électrique gainé est une résine époxy ou un cyanocrylate.

La présente invention a également pour objet un dispositif de détection d'usure de garnitures de friction, notamment de garnitures de plaquettes de freins, du type comportant un fil conducteur électrique gainé apte à être logé dans un trou réalisé dans une paroi latérale d'une garniture, tel que défini à la revendication 3.

Dans le but de mieux faire comprendre l'invention, on va en décrire maitenant deux mode de réalisation donnés à titre d'exemple et sans aucun caractère limitatif en référence au dessin schématique annexé dans lequel :
- la figure 1 représente une vue en perspective d'un mode de réalisation de l'invention,
- la figure 2 est une vue en coupe selon II-II de la figure 1.

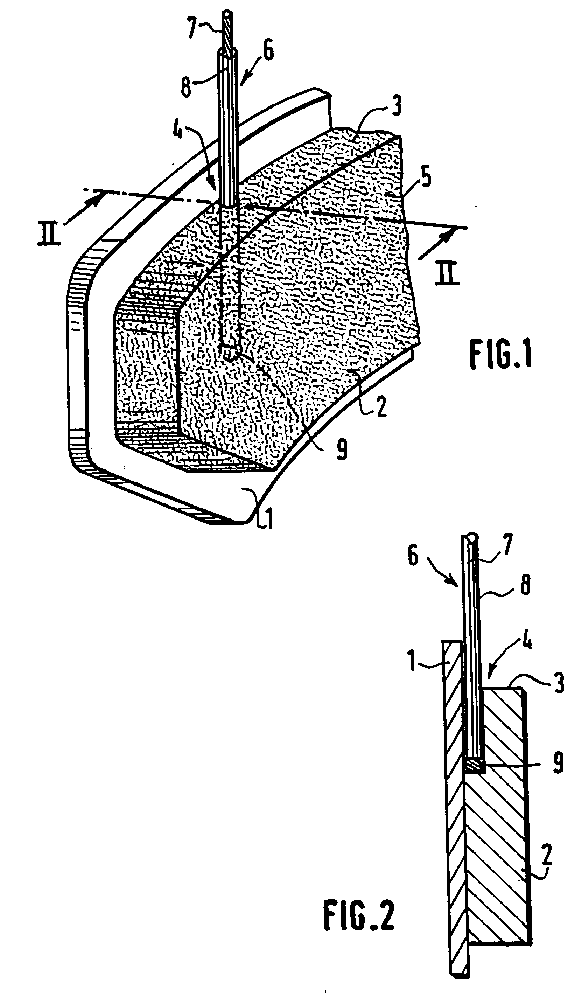

Sur la figure 1, une plaque support 1 et une garniture de friction 2 solidaire de cette plaque-support constituent un ensemble du type plaquette de freins à disques.

Sur une paroi latérale 3 de la garniture 2, un trou 4 a été réalisé de sorte que son axe soit sensiblement parallèle à la surface d'usure 5 de la garniture 2.

Conformément à l'invention, un fil conducteur électrique gainé 6 comportant une âme conductrice 7 et une gaine en matière plastique isolante 8 est introduit dans le trou latéral 4, son extrémité étant obturée à l'aide d'une goutte de résine 9 du type résine époxy, qui doit être utilisable à haute température.

Par exemple, elle supporte des élévations de températures jusqu'à 400° C pendant plusieurs heures.

Le dépôt de cette goutte de résine peut être par exemple réalisé à l'aide d'une machine à dispenser.

De préférence, on laisse gélifier le produit à température ambiante et on termine sa réticulation à température élevée.

En cours de réticulation, la résine pénètre dans l'extrémité de la gaine par capillarité. Ainsi, elle durcit en étant intimement solidarisée avec cette dernière, ce qui constitue à l'extrémité du fil un embout étanche à l'eau et résistant à de fortes élévations de températures.

Par ailleurs, la gaine 8 du fil conducteur électrique gainé 6 est elle-même susceptible de se détériorer, notamment en raison des variations de températures qu'elle subit et des dilatations de l'âme conductrice 7 qu'elle renferme.

La gaine 8 représentée sur le dessin est composée de fibres de verre revêtues individuellement d'un produit à base de silicone qui sont tressées entre elles pour constituer la gaine 8.

Dans une variante de ce mode de réalisation, la gaine ainsi obtenue est également revêtue dans sa totalité d'un produit à base de silicone.

On peut à cet effet utiliser du silicone pur ou une résine silicone qui peut être composée par exemple de silicone pur et d'un vernis acrylique.

Des tests appliqués sur cette gaine suivant la norme NFR 13 414 et NFR 13 415 ont révélé d'excellentes qualités d'isolant alliées à une bonne tenue à hautes températures ainsi qu'à une résistance mécanique importante, même après plusieurs jours d'immersion dans l'eau ou après chauffage à 250°C pendant quelques heures.

En particulier, on a observé que, dans ces conditions de préchauffage et d'immersion dans l'eau, un fil conducteur électrique revêtu d'une telle gaine présente une tension de claquage de l'ordre de 4 KV, valeur qui est quatre fois supérieure à la valeur requise par la norme susmentionnée.

## Revendications

1. Procédé pour réaliser un dispositif de détection d'usure de garnitures de friction (2), notamment de plaquettes de freins, selon lequel on obture, de façon stable et électriquement isolante dans tout le domaine de températures d'utilisation de la garniture (2), l'extrémité de la gaine (8) d'un fil conducteur électrique gainé (6), on réalise un trou (4) d'axe sensiblement parallèle à la surface d'usure (5) de la garniture (2) sur une paroi latérale (3) de cette garniture (2), on insère dans ce trou (4) l'extrémité du fil conducteur électrique gainé (6) et on la maintient en position par collage, caractérisé par le fait que l'on obture l'extrémité de la gaine (8) en y déposant une goutte de résine durcissable.

2. Procédé selon la revendication 1, caractérisé par le fait que ladite résine est une résine époxy ou un cyanocrylate.

3. Dispositif de détection d'usure de garnitures de friction (2) notamment de garnitures de plaquettes de frein, du type comportant un fil conducteur électrique gainé (6) apte à être logé dans un trou (4) réalisé dans une paroi latérale (3) de la garniture (2), l'extrémité de la gaine (8) du fil conducteur électrique étant obturée par un moyen d'obturation stable et électriquement isolant dans tout le domaine de températures d'utilisation de la garniture (2), caractérisé par le fait que le moyen d'obturation est une goutte de résine durcissable.

4. Dispositif selon la revendication 3, caractérisé par le fait que la gaine (8) du fil conducteur électrique (6) est composée de fibres de verre revêtues individuellement d'un produit à base de silicone, les fibres étant tressées entre elles pour constituer la gaine.

5. Dispositif selon la revendication 4, caractérisé par le fait que la gaine (8) est également revêtue dans sa totalité d'un produit à base de silicone.

6. Dispositif selon l'une quelconque des revendications 4 et 5, caractérisé par le fait que le produit à base de silicone est du silicone pur ou une résine silicone, composée, par exemple, de silicone pur et d'un vernis acrylique.

## Patentansprüche

1. Verfahren zur Herstellung einer Verschleißanzeigeeinrichtung für Reibbeläge (2), insbesondere Bremsbeläge, bei dem man das Ende der Ummantelung (8) einer ummantelten elektrisch leitenden Ader (6) auf im gesamten Betriebstemperaturbereich des Belages (2) stabile und elektrisch isolierende Weise verschließt, ein Loch (4) mit zur Verschleißfläche (5) des Belages (2) im wesentlichen paralleler Achse in einer Seitenwand (3) dieses Belages (2) ausbildet, das Ende der ummantelten elektrisch leitenden Ader (6) in dieses Loch (4) einsteckt und durch Klebung in Position hält, dadurch gekennzeichnet, daß man das Ende der Ummantelung (8) verschließt, indem man dort einen Tropfen eines aushärtbaren Harzes anbringt.

2. Verfahren nach Anspruch 1, dadurch gekennzeichnet, daß dieses Harz ein Epoxiharz oder ein Cyanacrylat ist.

3. Vorrichtung zur Verschleißanzeige von Reibbelägen (2), insbesondere Bremsbelägen, mit einer ummantelten elektrisch leitenden Ader (6), die in einem in einer Seitenwand (3) des Belages (2) ausgebildeten Loch (4) untergebracht werden kann, wobei das Ende der Ummantelung (8) der elektrisch leitenden Ader durch ein im gesamten Betriebstemperaturbereich des Belages (2) stabiles und elektrisch isolierendes Verschlußmittel verschlossen ist, dadurch gekennzeichnet, daß das Verschlußmittel ein Tropfen eines aushärtbaren Harzes ist.

4. Vorrichtung nach Anspruch 3, dadurch gekennzeichnet, daß die Ummantelung (8) der elektrisch leitenden Ader (6) aus Glasfasern aufgebaut ist, die einzeln mit einem Produkt auf Silikonbasis beschichtet sind, wobei die Fasern miteinander verflochten sind, um die Ummantelung zu bilden.

5. Vorrichtung nach Anspruch 4, dadurch gekennzeichnet, daß die Ummantelung (8) auch in ihrer Gesamtheit mit einem Produkt auf Silikonbasis beschichtet ist.

6. Vorrichtung nach einem der Ansprüche 4 und 5, dadurch gekennzeichnet, daß das Produkt auf Silikonbasis reines Silikon oder ein Silikonharz ist, das beispielsweise aus reinem Silikon und einem Acryllack zusammengesetzt ist.

## Claims

1. Method for producing a device for detecting wear of friction linings (2), in particular of brake pads, according to which the end of the sheath (8) of a sheathed electrically conducting wire (6) is closed off in stable and electrically insulating fashion throughout the working temperature range of the lining (2), a hole (4) of axis substantially parallel to the wearing surface (5) of the lining (2) is produced on a side wall (3) of this lining (2), the end of the sheathed electrically conducting wire (6) is inserted into this hole (4) and is held in position by adhesive bonding, characterized in that the end of the sheath (8) is closed off by depositing a drop of curable resin therein.

2. Method according to Claim 1, characterized in that the said resin is an epoxy resin or a cyanoacrylate.

3. Device for detecting wear of friction linings (2), in particular of brake pad linings, of the type including a sheathed electrically conducting wire (6) which can be housed in a hole (4) produced in a side wall (3) of the lining (2), the end of the sheath (8) of the electrically conducting wire being closed off by a closure means which is stable and electrically insulating throughout the working temperature range of the lining (2), characterized in that the closure means is a drop of curable resin.

4. Device according to Claim 3, characterized in that the sheath (8) of the electrically conducting wire (6) is composed of glass fibres individually coated with a silicone-based product, the fibres being braided together in order to form the sheath.

5. Device according to Claim 4, characterized in that the sheath (8) is also coated in its entirety with a silicone-based product.

6. Device according to either one of Claims 4 and 5, characterized in that the silicone-based product is pure silicone or a silicone resin, composed, for example, of pure silicone and an acrylic varnish.
